Europäisches Patentamt

**European Patent Office**

**Office européen des brevets**

(19)

(11) Veröffentlichungsnummer : **0 144 463**
**B1**

(12) **EUROPÄISCHE PATENTSCHRIFT**

(45) Veröffentlichungstag der Patentschrift :
16.06.87

(51) Int. Cl.⁴ : **G 03 F   3/08**

(21) Anmeldenummer : **83112580.2**

(22) Anmeldetag : **14.12.83**

(54) **Verfahren und Einrichtung zur Herstellung von Farbauszügen für den Einzelfarbendruck.**

(43) Veröffentlichungstag der Anmeldung :
**19.06.85 Patentblatt 85/25**

(45) Bekanntmachung des Hinweises auf die Patenterteilung : **16.06.87 Patentblatt 87/25**

(84) Benannte Vertragsstaaten :
**AT BE CH DE FR GB IT LI NL SE**

(56) Entgegenhaltungen :
**EP-A- 0 106 918**
**DE-A- 2 118 720**
**DE-A- 2 853 511**
**DE-A- 2 923 468**
**DE-C- 2 628 053**
**US-A- 3 210 552**
**ZEITSCHRIFT FÜR ANGEWANDTE CHEMIE, Band 87, Nr. 20, 1975; H.G. VÖLZ "Optische Eigenschaften von Pigmenten und objektive Methoden zu ihrer Prüfung und Bewertung", Seiten 721-750**

(73) Patentinhaber : **DR.-ING. RUDOLF HELL GmbH**
**Grenzstrasse 1-5**
**D-2300 Kiel 14 (DE)**

(72) Erfinder : **Jung, Eggert**
**Mühlenberg 25**
**D-2306 Schönberg (DE)**

EP 0 144 463 B1

## Beschreibung

Die Erfindung bezieht sich auf das Gebiet der elektronischen Reproduktionstechnik für den Einzelfarbendruck und betrifft insbesondere ein Verfahren und eine Einrichtung zur Herstellung von Farbauszügen für den Einzelfarbendruck. Unter Einzelfarbendruck wird z. B. der Textil-, Dekor- oder Verpackungsdruck verstanden.

Während der Farbauftrag auf das Druckmedium beim Mehrfarben-Mischdruck druch Übereinanderdrucken unterschiedlicher Anteile der Druckfarben « Gelb », « Magenta », « Cyan » und « Schwarz » erfolgt, wird beim Einzelfarbendruck jede zu druckende Farbe vor dem Druckprozeß ermischt und dann getrennt auf das Druckmedium übertragen, so daß für jede Farbe einer Farbvorlage ein entsprechender Farbauszug hergestellt werden muß.

Eine solche Farbvorlage weist beispielsweise Farbtöne mit einer verlaufenden Farbverteilung, d. h. mit einer unterschiedlichen Farbsättigung und/oder Helligkeit innerhalb der einzelnen Farbtöne auf. In diesem Falle müssen die Farbauszüge sowohl eine Aussage über die örtliche Verteilung der Einzelfarben als auch eine Aussage über den Farbverlauf, d. h. über die örtlich unterschiedliche Stärke des Farbauftrages liefern.

Aus der DE-B-26 28 053 ist bereits eine Einrichtung zur Herstellung von Farbauszügen für den Einzelfarbendruck bekannt. Durch punkt- und zeilenweise optoelektronische Abtastung einer Farbvorlage werden drei primäre Farbmeßwert-Signale gewonnen, welche die Farbanteile Rot, Grün und Blau der abgetasteten Bildpunkte repräsentieren. Eine mit den Farbmeßwert-Signalen beaufschlagte Farberkennungs-Schaltung, in der innerhalb eines Farbraumes ein Farb-Erkennungsbereich für eine auszuziehende Farbe (Auszugsfarbe) in der Farbvorlage abgegrenzt ist, selektiert bei der Vorlagenabtastung die ausgewählte Auszugsfarbe von den anderen Farben der Farbvorlage und erzeugt immer dann ein Farberkennungs-Signal, wenn die ausgewählte Auszugsfarbe in der Farbvorlage erkannt wird. Das Farberkennungs-Signal wird als Farbauszugs-Signal an ein Aufzeichnungsorgan, z. B. an eine Schreiblampe, gegeben, deren Helligkeit in Abhängigkeit des Farbauszugs-Signals moduliert wird. Die Schreiblampe belichtet punkt- und zeilenweise einen Film als Aufzeichnungsmedium, der nach der Entwicklung den Farbauszug für die ausgewählte Auszugsfarbe darstellt.

Die bekannte Einrichtung hat den Nachteil, daß im wesentlichen nur prismatische Farb-Erkennungsräume abgegrenzt werden können. Die Farb-Erkennungsräume lassen sich daher nicht optimal nach Form und Größe an die durch die Farbverläufe der Auszugsfarben vorgegebenen Farbbereiche anpassen,. wodurch das Farbauszugs-Signal keine eindeutige Aussage über die Farbsättigung und/oder Helligkeit der Auszugsfarben liefert.

Eine andere Einrichtung zur Herstellung von Farbauszügen für den Einzelfarbendruck wird in der DE-B-28 53 511 beschrieben. Bei dieser Einrichtung werden aus den Farbmeßwert-Signalen korrigierte Farbauszugs-Signale abgeleitet und eines der korrigierten Farbauszugs-Signale zur Aufzeichnung eines Farbauszugs für den Einzelfarbendruck ausgewählt. Mit Hilfe einer Farberkennungs-Schaltung, in der wiederum ein Farb-Erkennungsraum für die Auszugsfarbe abgegrenzt ist, wird ein .Farberkennungs-Signal erzeugt, welches eine Ja/Nein-Aussage über das Vorhandensein der ausgewählten Auszugsfarbe in der Farbvorlage liefert. Während der Aufzeichnung des Farbauszuges schaltet das Farberkennungs-Signal das ausgewählte korrigierte Farbauszugs-Signal immer dann zur Schreiblampe durch, wenn die voreingestellte Auszugsfarbe in der Farbvorlage erkannt wird. Durch das Schalten erscheinen die Farbverteilungen in den Farbauszügen scharf umrissen, so daß die einzelnen Auszugsfarben beim späteren Druck exakt nebeneinander gedruckt werden. Dies kann gelegentlich zu störenden Abrissen der Farbverläufe im Druck führen.

Aus der europäischen Patentanmeldung Nr. 82 112 002.9 (EP-A-106 918) ist eine Variante der zuvor beschriebenen Einrichtung bekannt, bei der die Bildung solcher Abrisse zwar reduziert ist, dennoch wird auch dort kein verlaufendes Farbauszugs-Signal erzeugt, welches einen Farbverlauf exakt wiedergibt.

Alle bekannten Einrichtungen haben außerdem den Nachteil, daß sie nicht speziell zum Ausziehen von Farbtönen ausgebildet sind.

Der in den Ansprüchen 1 und 16 angegebenen Erfindung liegt daher die Aufgabe zugrunde, ein Verfahren und eine Einrichtung zur Herstellung von Farbauszügen für den Einzelfarbendruck anzugeben, mit denen sich Auszugsfarbtöne und Auszugsfarben hinsichtlich Farbton, Farbsättigung und Helligkeit optimal abgrenzen lassen und mit denen Farbauszugs-Signale erzeugt werden, welche die Farbverläufe in Auszugsfarbtönen und Auszugsfarben exakt wiedergeben.

Die angegebene Erfindung ermöglicht außerdem bei der Aufzeichnung von Farbauszügen eine exakte Trennung der Auszugsfarbtöne von ihren Komplementärfarbtönen und von Farbtönen im Graubereich.

Die Erfindung wird im folgenden anhand der Figuren 1-9 näher erläutert. Es zeigen :

Figur 1 ein Ausführungsbeispiel für eine Einrichtung zur Herstellung von Farbauszügen für den Einzelfarbendruck ;

Figur 2 eine grafische Darstellung zur Koordinaten-Drehung ;

Figur 3 einen Signalverlauf eines Farbton-Signals ;

Figur 4 einen Signalverlauf eines Farbton-Steuersignals ;

Figur 5 einen Signalverlauf eines Luminanz-Signals ;
Figur 6 einen Signalverlauf eines Farbsättigungs-Signals ;
Figur 7 ein Ausführungsbeispiel für ein Abtastorgan ;
Figur 8 ein Ausführungsbeispiel für eine Transformations-Stufe ;
Figur 9 ein Ausführungsbeispiel für einen Farbsättigungs-Signalgenerator.

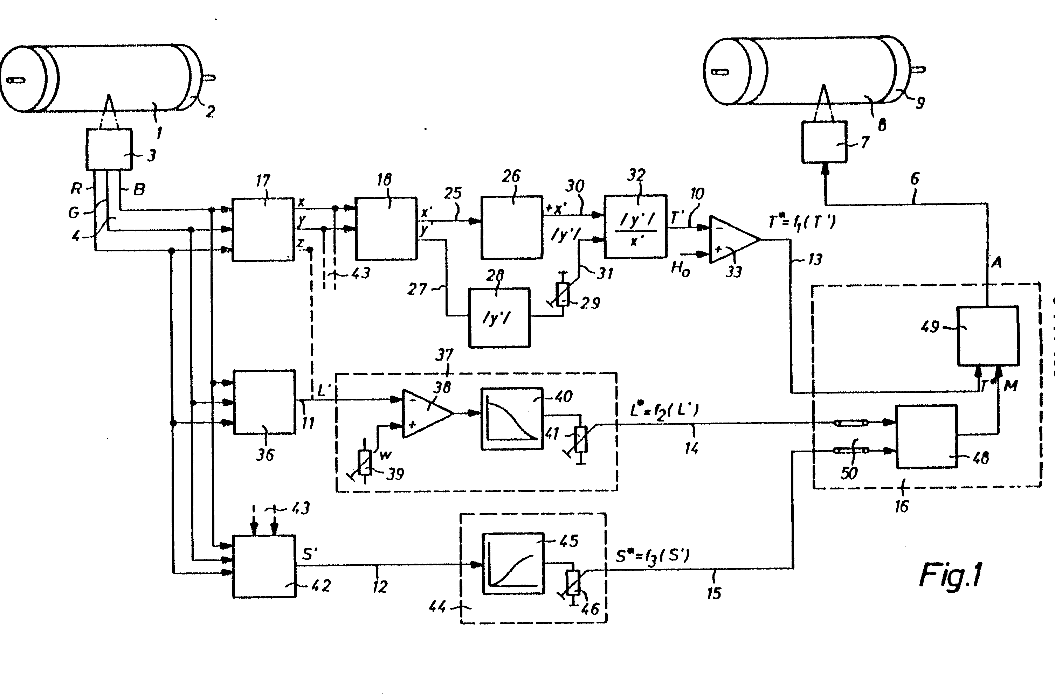

Fig. 1 zeigt ein Ausführungsbeispiel für eine Einrichtung zur Herstellung von Farbauszügen für den Einzelfarbendruck, nachfolgend mit Farbscanner für den Einzelfarbendruck bezeichnet.

Wie bereits in der Beschreibungseinleitung dargelegt, wird beim Einzelfarbendruck abweichend vom Mehrfarben-Mischdruck jede zu druckende Einzelfarbe vor dem Druckprozeß ermischt und die verschiedenen Einzelfarben in getrennten Vorgängen auf das Druckmedium übertragen. Beim Einzelfarbendruck muß daher für jeden auszuziehenden Einzelfarbton bzw. für jede auszuziehende Einzelfarbe der zu reproduzierenden Farbvorlage ein entsprechender Farbauszug hergestellt werden, wobei es darauf ankommt, daß der Farbverlauf der Farbvorlage in den Farbauszügen möglichst gut wiedergegeben wird.

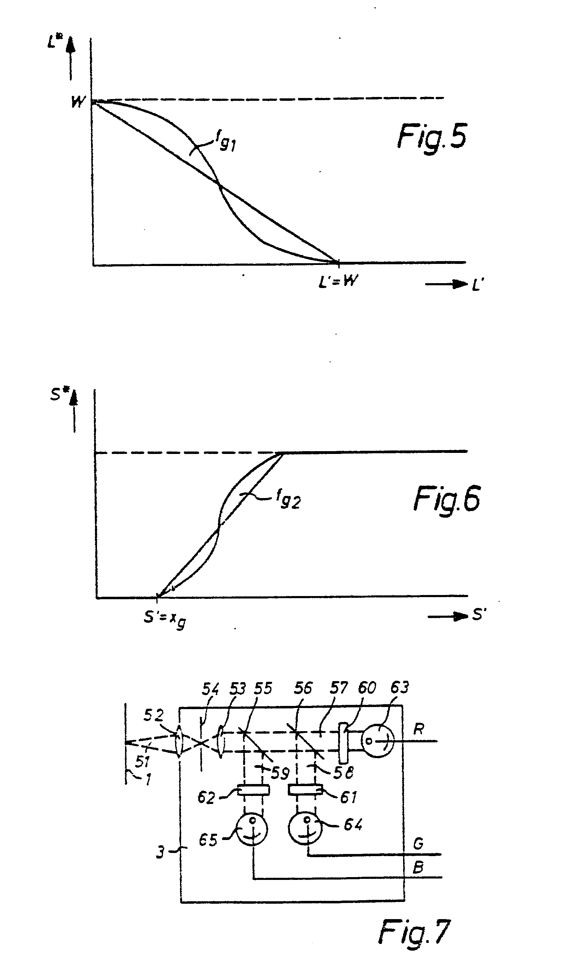

Die Farbvorlage 1, von der die Farbauszüge für den Einzelfarbendruck hergestellt werden sollen, befindet sich auf einer rotierenden Abtasttrommel 2 eines nicht näher dargestellten Farbscanners und wird von einem optoelektronischen Abtastorgan 3 punkt- und zeilenweise, trichromatisch abgetastet. Das von der abgetasteten Farbvorlage 1 reflektierte oder durchgelassene Abtastlicht wird im optoelektronischen Abtastorgan 3 mit Hilfe von Farbteilern, Korrekturfiltern und optoelektronischen Wandlern in die Farbmeßwert-Signale R, G und B umgewandelt, welche ein Maß für die Intensitäten der Grundfarbenanteile « Rot », « Grün » und « Blau » an den abgetasteten Farben sind. Die Farbmeßwert-Signale R, G und B stellen die Raum- oder Farbkoordinaten der Farborte der abgetasteten Farben in dem kartesischen RGB-Farbraum dar. Das optoelektronische Abtastorgan 3, welches axial zur Abtasttrommel 2 verschiebbar ist, wird sowohl zum Ausmessen einzelner Farbpunkte in der Farbvorlage 1 als auch zum flächenmäßigen, punkt- und zeilenweisen Abtasten der Farbvorlage 1 während der eigentlichen Aufzeichnung der Farbauszüge verwendet. Ein Ausführungsbeispiel für ein optoelektronisches Abtastorgan zeigt Fig. 7.

Die Farbmeßwert-Signale R, G und B gelangen über Leitungen 4 an eine Schaltungsanordnung zur Erzeugung eines Einzelfarbenauszug-Signals A auf eine Leitung 6. Das Einzelfarbenauszug-Signal A wird über die Leitung 6 an ein Aufzeichnungsorgan 7 in Form einer Schreiblampe gegeben. Das Aufzeichnungsorgan 7, dessen Helligkeit von dem Einzelfarbenauszugs-Signal A moduliert wird, belichtet punkt- und zeilenweise ein Aufzeichnungsmedium 8, z. B. einen Film, der auf einer rotierenden Aufzeichnungstrommel 9 angeordnet ist. Der belichtete und entwickelte Film ist der gewünschte Farbauszug.

In der Schaltungsanordnung werden aus den zugeführten Farbmeßwert-Signalen R, G und B ein Farbton-Signal T' auf einer Leitung 10, ein Luminanz-Signal L' auf einer Leitung 11 sowie ein Farbsättigungs-Signal S' auf einer Leitung 12 erzeugt, welche durch Signalbegrenzung und gegebenenfalls durch zusätzliche Signalformung in ein Farbton-Steuersignal $T^* = f_1$ (T') auf einer Leitung 13 bzw. in ein Luminanz-Steuersignal $L^* = f_2$ (L') auf einer Leitung 14 und in ein Farbsättigungs-Steuersignal $S^* = f_3$ (S') auf einer Leitung 15 umgewandelt werden.

Farbton (T), Farbsättigung (S) und Luminanz (L) sind die zylindrischen Farbkoordinaten des Farbton/Farbsättigungs/Luminanz-Farbraumes, wobei die Lage der Farborte in der Chrominanzebene durch die Farbtonwerte T als Winkel und durch die Farbsättigungswerte S als Radien festgelegt sind, während die Helligkeitswerte der Farben durch die Luminanz L bestimmt werden.

Wenn der Farbauszug eines ausgewählten Farbtones der Farbvorlage 1 aufzuzeichnen ist, wird das Farbton-Signal T' derart begrenzt, daß es nur für diejenigen Farbtöne von Null verschieden ist, die innerhalb eines sektorförmigen Farbton-Bereiches in der Chrominanzebene um einen in allen vier Quadranten freiwählbaren Farbton, nachfolgend als Auszugsfarbton $T_0$ bezeichnet, liegen. In diesem Falle wird das begrenzte Farbton-Steuersignal $T^*$ als Einzelfarbenauszugs-Signal A verwendet, welches eine Aussage über den Abstand der Farbtöne der abgetasteten Farben zu dem eingestellten Auszugsfarbton $T_0$ liefert, falls die Farbtöne der abgetasteten Farben innerhalb des abgegrenzten Farbton-Bereiches liegen und welches gleich Null ist, wenn die Farbtöne der abgetasteten Farben nicht in den abgegrenzten Farbton-Bereich fallen.

Wenn der Farbauszug einer bestimmten Auszugsfarbe der Farbvorlage 1 aufzuzeichnen ist, wird der sektorförmige Farbton-Bereich zusätzlich noch hinsichtlich der Helligkeit und der Farbsättigung durch entsprechende Begrenzung des Luminanz-Signals L' und/oder des Farbsättigungs-Signale S' abgegrenzt. In diesem Falle wird das Einzelfarbenauszugs-Signal A durch Verknüpfung des Farbton-Steuersignals $T^*$, des Luminanz-Steuersignals $L^*$ und des Farbsättigungs-Steuersignals $S^*$ in einer Verknüpfungs-Stufe 16 abgeleitet. Aufbau und Wirkungsweise der Schaltungsanordnung sollen nachfolgend näher erläutert werden, und zwar zunächst für den Fall, daß Farbtöne ausgezogen werden sollen.

Die vom optoelektronischen Abtastorgan 3 über die Leitungen 4 gelieferten Farbmeßwert-Signale R, G und B werden zunächst in einer Umformer-Stufe 17 logarithmiert oder teillogarithmiert und gegebenenfalls nach einer Gradationskurve korrigiert. Die dadurch gewonnenen Farbmeßwert-Signale R', G' und B' werden durch eine Matrizierung gemäß Gleichungen (1) in Chrominanz-Signale x und y und in ein Luminanz-Signal z umgeformt.

$$x = a_{11}R' + a_{12}G' + a_{13}B'$$
$$y = a_{21}R' + a_{22}G' + a_{23}B'$$

3

$$z = a_{31}R' + a_{32}G' + a_{33}B' \tag{1}$$

Die Matrizierung entspricht einer Transformation der Farbkoordinaten des kartesischen RGB-Farbraumes in die Farbkoordinaten x, y und z des kartesischen Chrominanz/Luminanz-Farbraumes, wobei die Farbkoordinaten x und y die Lage der Farborte der Farben in der Chrominanzebene und die Farbkoordinaten z die Helligkeitswerte der Farben kennzeichnen.

Zunächst wird der gewünschte Auszugsfarbton $T_0$, um den ein Farbton-Bereich abgegrenzt werden soll, durch Vorgabe eines Farbmeßwert-Tripels $R_0$, $G_0$ und $B_0$ bzw. durch Vorgabe seiner durch Matrizierung gebildeten Chrominanzwerte $x_0$ und $y_0$ oder durch Ausmessen eines Probenpunktes in der Farbvorlage 1 mit Hilfe des optoelektronischen Abtastorgans 3 definiert.

Die Chrominanzwerte $x_0$ und $y_0$ werden erfindungsgemäß durch eine auf den ausgewählten Auszugsfarbton $T_0$ einstellbare Matrizierung nach Gleichungen (2) in entsprechende Chrominanzwerte $x'_0$ und $y'_0$ transformiert, wobei die Transformationskoeffizienten a, b, c und d so bestimmt werden, daß die Bedingungen $x'_0 > 0$ und $y'_0 = 0$ erfüllt sind.

$$x'_0 = bx_0 + cy_0 \tag{2}$$
$$y'_0 = - dx_0 + ey_0$$

Im ausgewählten Ausführungsbeispiel werden vorzugsweise Transformationskoeffizienten der Form $b = e = \cos\,\alpha$ und $c = -d = \sin\,\alpha$ verwendet, so daß die Matrizierung der Drehung eines X'Y'-Farbkoordinatensystems um ein Winkel $\alpha$ gegenüber dem ursprünglichen XY-Farbkoordinatensystem nach Gleichung (3) entspricht.

$$x'_0 = x_0 \cos\,\alpha + y_0 \sin\,\alpha \tag{3}$$
$$y'_0 = - x_0 \sin\,\alpha + y_0 \cos\,\alpha$$

Der zur Erfüllung der Bedingungen $x'_0 > 0$ und $y'_0 = 0$ erforderliche Winkel $\alpha$ wird in einer Transformations-Stufe 18 durch einen automatischen Abgleichvorgang bei laufender Überprüfung der Bedingungen $x'_0 > 0$ und $y'_0 = 0$ in eine Überwachungs-Stufe innerhalb der Transformations-Stufe 18 bestimmt, indem der Winkel $\alpha$ so verändert wird, daß die Bedingungen erfüllt sind. Der gefundene Winkel $\alpha_0 = \text{arc tan } y_0/x_0$ entspricht dem Auszugsfarbton $T_0$, und die X'-Achse des um den Winkel $\alpha_0$ gedrehten X'Y'-Farbkoordinatensystems verläuft durch den in die Chrominanzebene transformierten Farbort $F'_0$ des Auszugsfarbtons $T_0$. Die beschriebene Koordinaten-Drehung entspricht einer Drehung des Chrominanz/Luminanz-Farbraumes um die Luminanz-Achse.

Der gefundene Winkel $\alpha_0$ wird in der Transformations-Stufe 18 gespeichert und während der Aufzeichnung des Farbauszuges zur laufenden Transformation der Chrominanz-Signale x und y in die gedrehten Chrominanz-Signale x' und y' gemäß Gleichungen (4) verwendet, wobei das gedrehte Chrominanz-Signal y' von Null verschieden ist für alle Farbtöne der abgetasteten Farben, die von dem ausgewählten Auszugsfarbton $T_0$ abweichen und gleich Null ist für alle Farbtöne, die mit dem ausgewählten Auszugsfarbton $T_0$ übereinstimmen.

$$x' = x \cos\,\alpha_0 + y \sin\,\alpha_0 \tag{4}$$
$$y' = - x \sin\,\alpha_0 + y \cos\,\alpha_0$$

Es liegt im Rahmen der Erfindung, die Matrizierungen in einem einzelnen Schritt durchzuführen.

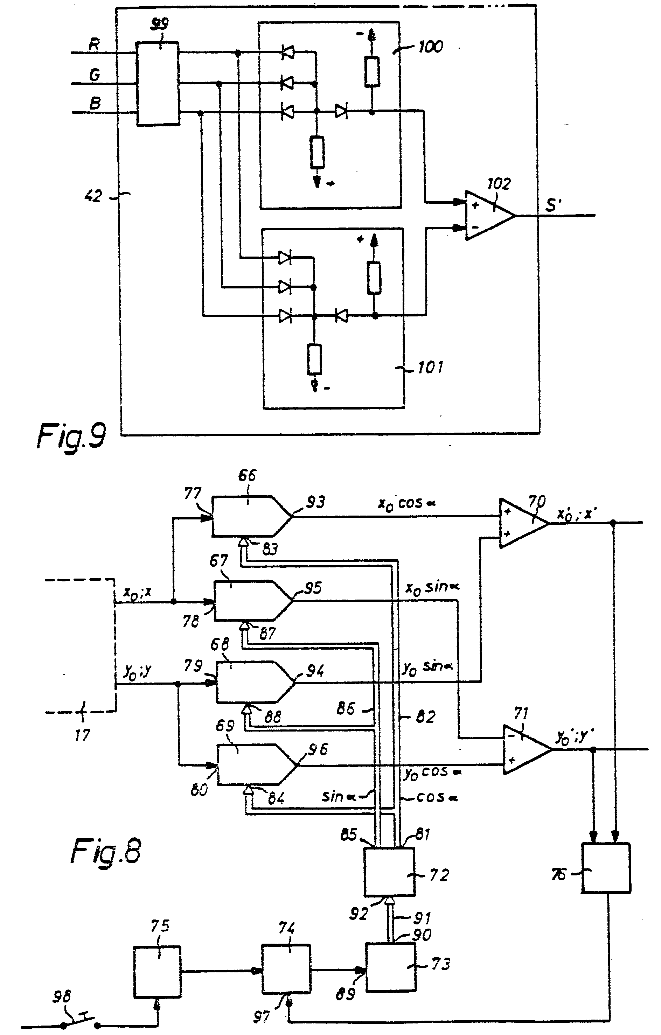

Ein detailliertes Ausführungsbeispiel für die Transformations-Stufe 18 wird in Fig. 8 angegeben.

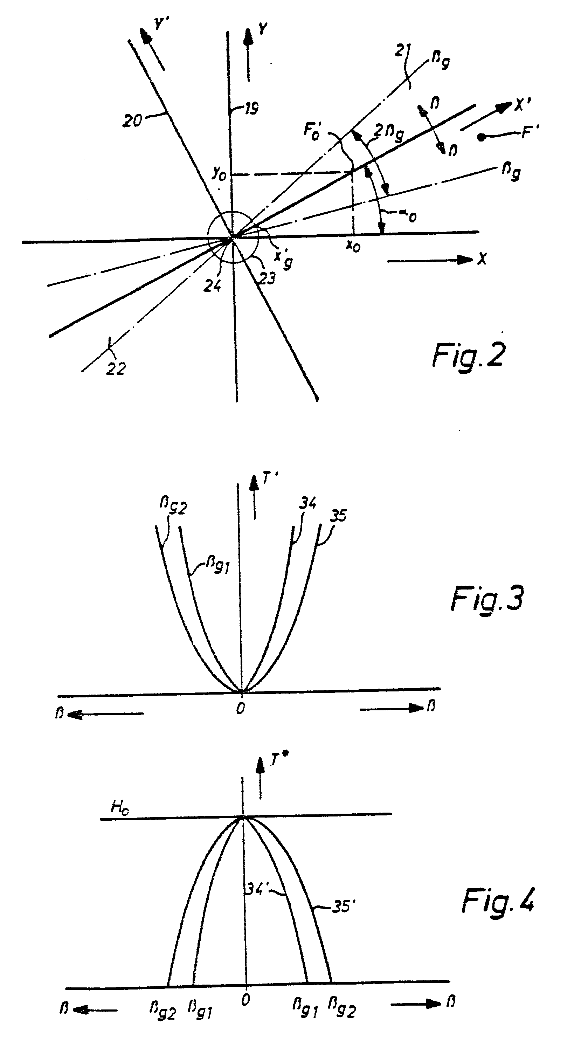

Die zuvor beschriebene Koordinaten-Drehung wird anhand einer grafischen Darstellung in Fig. 2 nochmals verdeutlicht.

Fig. 2 zeigt die Chrominanzebene des Chrominanz/Luminanz-Farbraumes mit dem XY-Farbkoordinatensystem 19, wobei die Z-Achse (Grauachse) des Chrominanz/Luminanz-Farbraumes senkrecht zur Chrominanzebene verläuft. Ein transformierter Farbort $F'_0$ eines ausgewählten Auszugsfarbtons $T_0$ ist im XY-Farbkoordinatensystem 19 durch die Farbkoordinaten $x_0$ und $y_0$ definiert. Gleichzeitig ist das um den Winkel $\alpha_0$ gedrehte X'Y'-Farbkoordinatensystem 20 dargestellt, dessen X'-Achse durch den transformierten Farbort $F'_0$ verläuft, so daß der transformierte Farbort $F'_0$ im gedrehten X'Y'-Farbkoordinatensystem 20 die Farbkoordinaten $x'_0 > 0$ und $y'_0 = 0$ aufweist. Der Winkel $\alpha_0 = \text{arc tan } y_0/x_0$ entspricht dem Auszugsfarbton $T_0$ im XY-Farbkoordinatensystem 19.

Gleichzeitig ist symmetrisch zur X'-Achse des gedrehten X'Y'-Farbkoordinatensystems 20 ein sektorförmiger Farbton-Bereich 21 dargestellt, dessen Grenzwinkel $\beta_g$, (Öffnungswinkel 2 $\beta_g$) bezogen auf die X'-Achse, zur Eingrenzung der Auszugsfarbtöne $T_0$ einstellbar ist. Für einen beliebigen Farbort F' innerhalb des Farbton-Bereiches 21 entspricht in erster Näherung bei kleinem Winkel B das gedrehte Chrominanz-Signal x' der Farbsättigung und der Quotient $y'/x' = \tan\,\beta$ der Abweichung des Farbtons der abgetasteten Farbe von dem gewählten Auszugsfarbton $T_0$, wobei der Quotient mit wachsender Abweichung ansteigt.

Außerdem zeigt Fig. 2 noch die zu dem abgegrenzten Auszugsfarbton gehörenden Komplementärfarbtöne innerhalb eines Sektors 22, der durch Spiegelung des Farbton-Bereiches 21 an der Y'-Achse des X'Y'-Farbkoordinatensystems 20 entstanden ist. Das gedrehte Chrominanz-Signal x' ist für die abgegrenzten Farbtöne positiv, dagegen für die Komplementärfarbtöne negativ. Häufig erweist es sich bei der Herstellung von Farbauszügen als notwendig, Schwankungen oder Verläufe im Grau zusammenzufassen und als einheitliches « Grau » auszuziehen. Ein solcher Bereich 23 für « Grau » ist in Fig. 2 um die Grauachse 24 angedeutet, wobei die Grenze des Bereichs 23 durch einen Grenz-Farbsättigungswert $x'_g$ definiert ist.

Zurück zu Fig. 1.

Das in der Transformations-Stufe 18 erzeugte gedrehte Chrominanz-Signal x' wird über eine Leitung 25 einer Auswahl-Stufe 26 in Form einer Diodenschaltung zugeführt, welche nur die positiven Werte des gedrehten Chrominanz-Signals x' als Signal + x' durchläßt. Am Ausgang der Auswahl-Stufe 26 erscheint somit immer nur dann ein Signal, wenn die Farbtöne der von der Farbvorlage 1 abgetasteten Farben, bezogen auf die Y'-Achse des gedrehten X'Y'-Farbkoordinatensystems 20 (Fig. 2), auf der Seite des abgegrenzten Farbton-Bereiches 21 liegen, wenn es sich also um keine Komplementärfarbtöne handelt, so daß in vorteilhafter Weise eine exakte Trennung von Farbtönen und Komplementärfarbtönen erreicht wird.

Das gedrehte Chrominanz-Signal y' gelangt von der Transformations-Stufe 18 über eine Leitung 27 auf eine Betrags-Stufe 28. In der Betrags-Stufe 28 wird der Betrag des gedrehten Chrominanz-Signals y' als Signal |y'| gebildet.

Durch amplitudenmäßige Einstellung des Signals |y'| mittels eines Potentiometers 29 wird der Grenzwinkel $\beta_g$ für den gewünschten Farbton-Bereich 21 (Fig. 2) festgelegt.

Im dargestellten Ausführungsbeispiel werden die Signale + x' und |y'| über Leitungen 30 und 31 einer Dividier-Stufe 32 zugeführt, in der durch Quotientenbildung das Farbton-Signal T' gemäß Gleichung (5) gewonnen wird.

$$T' = \frac{|y'|}{+\,x'} = \tan \beta \qquad (5)$$

Das Farbton-Signal T' liefert eine Aussage über die betragsmäßige Abweichung der Farbtöne der auf der Farbvorlage 1 abgetasteten Farben von dem eingestellten Auszugsfarbton $T_0$, wobei bei Farbton-Übereinstimmung ($\beta = 0$) das Farbton-Signal T' Null ist.

Der Dividier-Stufe 32 ist eine Subtrahier-Stufe 33 nachgeschaltet, in der das über die Leitung 10 zugeführte Farbton-Signal T' gemäß Gleichung (6) auf den Farbton-Bereich begrenzt und in das Farbton-Steuersignal T* auf der Leitung 13 umgeformt wird.

$$T^* = f_1 \, (T')$$
$$T^* = H_0 - T' \qquad (6)$$

Das Farbton-Steuersignal T* ist bei Farbton-Übereinstimmung ($\beta = 0$) gleich dem konstanten Wert $H_0$, der vorzugsweise $H_0 = \tan y_0/x_0$ gewählt wird, nimmt mit zunehmender Farbton-Abweichung ab und erreicht an den Grenzen des eingestellten Farbton-Bereiches den Wert Null. Alternativ zur Einstellung des Grenzwinkels $\beta_g$ des Farbton-Bereiches mit Hilfe des Potentiometers 29 kann der Grenzwinkel auch durch Amplitudenänderung des Farbton-Signals T' oder des Wertes $H_0$ eingestellt werden.

Fig. 3 zeigt das Farbton-Signal T' mit zwei Verläufe 34 und 35, die sich für zwei mittels des Potentiometers 29 unterschiedlich eingestellten Grenzwinkeln $\beta_g$ des Farbton-Bereiches ergeben.

Fig. 4 zeigt die zugehörigen Verläufe 34' und 35' des Farbton-Steuersignals T* bzw. des Einzelfarbenauszugs-Signals A, wenn Farbsättigung und Helligkeit unberücksichtigt bleiben.

In einer Näherungslösung ist das Farbton-Signal T'~|y'|. In diesem Falle entfällt die Dividier-Stufe 32, und das Signal |y'| auf der Leitung 31 wird direkt auf die Subtrahier-Stufe 33 gegeben.

Wenn nun ein Farbauszug für eine ausgewählte Auszugsfarbe hergestellt werden soll, muß der Farbton-Bereich zusätzlich hinsichtlich der Farbsättigung und der Helligkeit eingegrenzt und das Einzelfarbenauszugs-Signal A so begrenzt werden, daß es nur für einen der Auszugsfarbe entsprechenden Farb-Bereich des Farbraumes von Null verschieden ist.

Dazu wird in einem als Addierer ausgebildeten Luminanz-Signalgenerator 36, dem die Farbmeßwert-Signale R, G und B über die Leitungen 4 zugeführt werden, aus mindestens einem, vorzugsweise aus allen drei Farbmeßwert-Signalen R, G und B das Luminanz-Signal L' gemäß der Beziehung $L' = a_{31}R + a_{32}G + a_{33}B$ gewonnen.

Als Luminanz-Signal L' kann auch das in der Umformer-Stufe 17 gebildete Luminanz-Signal z verwendet werden, falls an der Bildung des Luminanz-Signals L' alle drei Farbmeßwert-Signale R, G und B beteiligt sind. In diesem Falle kann der Luminanz-Signalgenerator 36 entfallen.

Das Luminanz-Signal L' auf der Leitung 11 wird in einer dem Luminanz-Signalgenerator 36 nachgeschalteten Signalformer-Stufe 37 gemäß Gleichung (7) in das Luminanz-Steuersignal L* auf der Leitung 14 umgewandelt.

$$L^* = f_2 \, (L') \qquad (7)$$

**0 144 463**

$$L^* = f_{gl}\, k_l\, (W - L')$$

Die Signalformer-Stufe 37 besteht aus einer Subtrahier-Stufe 38, in dem das Differenzsignal aus einem mit Hilfe eines Potentiometer 39 einstellbaren Spannungswert W und dem Luminanz-Signal L' gebildet wird, einer Gradations-Stufe 40, in der das Differenzsignal nach der Gradationsfunktion $f_{gl}$ verändert wird und aus einem Potentiometer 41. Mit dem Potentiometer 41 wird derjenige Anteil $k_1$ des Differenzsignals festgelegt, der als Luminanz-Steuersignal L* verwendet werden soll.

Der Spannungswert W ist der normierte Weißpegel, auf den alle drei Farbmeßwert-Signale R, G und B beim Ausmessen der hellsten, neutralen Bildstelle (Weißpunkt) auf der Farbvorlage 1 bei der Weißpegel-Eichung des Farbscanners abgeglichen wurden. Somit ist das Luminanz-Steuersignal L* bei fehlendem Luminanz-Signal L' gleich dem Weißpegel W, nimmt mit wachsendem Luminanz-Signal L' ab und erreicht bei einem dem Weißpegel W entsprechenden Wert des Luminanz-Signals L' den Wert Null. Fig. 5 zeigt einen typischen Verlauf des Luminanz-Steuersignals L*.

Das Farbsättigungs-Signal S' auf der Leitung 12 wird in einem Farbsättigungs-Signalgenerator 42 erzeugt. Das Farbsättigungs-Signal S' kann gemäß der Gleichung $S' = \sqrt{x^2 + y^2}$ aus den in der Umformer-Stufe 17 gebildeten Chrominanz-Signalen x und y gewonnen werden, welche dem Farbsättigungs-Signalgenerator 42 über die gestrichelt angedeuteten Leitungen 43 zugeführt werden. In diesem Falle gibt das Farbsättigungs-Signal S' die exakten Farbsättigungswerte der auf der Farbvorlage 1 abgetasteten Farben wieder. Der Farbsättigungs-Signalgenerator 43 enthält dann Rechenbausteine (Quadrierer, Addierer, Radizierer), die aber keine hohe Arbeitsgeschwindigkeit zulassen. Um diese Schwierigkeit zu beheben, wird in vorteilhafter Weise ein an die exakten Farbsättigungswerte angenähertes Farbsättigungs-Signal S' verwendet. In diesem Falle wird das angenäherte Farbsättigungs-Signal S' aus den über die Leitungen 4 an den Farbsättigungs-Signalgenerator 43 gelangenen Farbmeßwert-Signalen R, G und B abgeleitet, in dem laufend das maximale und das minimale Farbmeßwert-Signal festgestellt und das Differenzsignal der Extremwerte gebildet wird, welches näherungsweise dem Farbsättigungs-Signal S' entspricht, da jeweils das maximale Farbmeßwert-Signal die Farbsättigung und das minimale Farbmeßwert-Signal den Grauton einer abgetasteten Farbe repräsentieren. Da der Farbsättigungs-Signal-generator 42 nunmehr eine Maximum- und eine Minimum-Auswahlstufe sowie eine Differenz-Stufe, aber keine oben genannten Rechenbausteine enthält, kann in vorteilhafter Weise die Arbeitsgeschwindigkeit erhöht werden. Ein Ausführungsbeispiel für den Farbsättigungs-Signalgenerator 42 zeigt Fig. 9.

In einer dem Farbsättigungs-Signalgenerator 42 nachgeschalteten Signalformer-Stufe 44 wird das Farbsättigungs-Signal S' auf der Leitung 12 gemäß Gleichung (8) in das Farbsättigungs-Steuersignal S* auf der Leitung 15 umgewandelt.

$$S^* = f_3\,(S') \qquad\qquad\qquad (8)$$
$$S^* = f_{g2}\, k_2\, S'$$

Die Signalformer-Stufe 44 enthält eine Gradations-Stufe 45 und ein Potentiometer 46. In der Gradations-Stufe 45 wird das Farbsättigungs-Signal S' nach der Gradationsfunktion $f_{g2}$ modifiziert und mit Hilfe des Potentiometers 46 wird derjenige amplitudenmäßige Anteil $k_2$ des Farbsättigungs-Signals S' festgelegt, der als Farbsättigungs-Steuersignal S* verwendet werden soll.

Vorzugsweise ist die Gradationsfunktion $f_{g2}$ so gewählt, daß das Farbsättigungs-Steuersignal S* bis zu einem bereits in Fig. 2 erläuterten Grenz-Farbsättigungswert $x_g$ Null ist, dann nach der Gradationsfunk-tion $f_{g2}$ ansteigt und bei einem maximalen Farbsättigungswert einen konstanten Wert erreicht. Figur 6 zeigt einen typischen Verlauf des Farbsättigungs-Steuersignals S*.

Falls eine noch größere Näherung bei der Bildung des Farbsättigungs-Signals S' zulässig ist, kann auch das Signal + x' verwendet werden, welches der Signalformer-Stufe 44 anstelle des Farbsättigungs-Signals S' zugeführt wird. In diesem Falle entfällt der Farbsättigungs-Signal-generator 42.

In dem beschriebenen Ausführungsbeispiel werden das Farbton-Steuersignal T*, das Farbsättigungs-Steuersignal S* und das Luminanz-Steuersignal L* in der Verknüpfungs-Stufe 16 multiplikativ zu dem Einzelfarbenauszugs-Signal A gemäß Gleichung (9) verknüpft. Alternativ kann die Verknüpfung auch additiv erfolgen.

$$A = T^* \cdot S^* \cdot L^* \qquad\qquad\qquad (9)$$

Die Verknüpfungs-Stufe 16 besteht beispielsweise aus zwei Multiplizier-Stufen 48 und 49 und Schaltern 50. In der Multiplizier-Stufe 48 werden zunächst aus dem Farbsättigungs-Steuersignal S* und/oder dem Luminanz-Steuersignal L* ein Produktsignal M gebildet, wobei die beteiligten Signale mittels der Schalter 50 auswählbar sind. In der zweiten Multiplizier-Stufe 49 wird das Einzelfarbenauszugs-Signal A aus dem Farbton-Steuersignal T* und dem Produktsignal M gewonnen. Anstelle der Multiplizier-Stufe 49 kann auch ein durch das Produktsignal M gesteuerter Schalter für das Farbton-Steuersignal T* verwendet werden.

Die jeweilige Abhängigkeit des Einzelfarbenauszugs-Signals A von Farbton, Farbsättigung und Helligkeit ist aus den in Fig. 4, Fig. 5 und Fig. 6 gezeigten Signalverläufen ersichtlich. Das Einzelfarbenauszugs-Signal A hat bezüglich des Farbtons bei Farbton-Übereinstimmung einen maximalen Wert ($H_0$), nimmt mit wachsender Farbton-Abweichung vom Auszugsfarbton ($T_0$) ab und erreicht an den eingestellten Grenzen des Farbton-Bereiches (21) den Wert Null. Bezüglich der Farbsättigung ist das Einzelfarbenauszugs-Signal A in einem Graubereich bis zum Grenz-Farbsättigungswert $x_g$ gleich Null und steigt dann mit wachsenden Farbsättigungswerten in den abgetasteten Farben an. Bezüglich der Helligkeitswerte nimmt das Einzelfarbenauszugs-Signal A mit steigenden Helligkeitswerten ab und erreicht bei einem Helligkeitswert, der dem Weißpegel entspricht, den Wert Null.

Durch die beschriebene Art der Bildung des Einzelfarbenauszugs-Signals A wird in vorteilhafter Weise eine Entsättigung der außerhalb des eingestellten Bereiches liegenden Farbtöne und Farben erreicht. Gleichzeitig wird der Farbverlauf oder der Farbübergang in einem Farbauszug derart verbessert, daß die Bereichsgrenzen nicht mehr scharf, sondern überlappend aufgezeichnet werden. Durch die Überlappung entsteht beim späteren Druck eine Mischdruck-Zone, in der die ermischten Farben nicht mehr nebeneinander, sondern übereinander gedruckt werden, wodurch störende Farbabrisse vermieden werden.

Durch die einstellbaren Verläufe der Steuersignale (T*, S*, L*) kann die Abhängigkeit des Einzelfarbenauszugs-Signals A vom Farbton, der Farbsättigung und der Helligkeit individuell angepaßt werden, wodurch die Herstellung von Farbauszügen für den Einzelfarbendruck wesentlich verbessert wird. Beispielsweise lassen sich Farbauszüge für dunkle oder helle Farben herstellen, wobei die hellen bzw. dunklen Farben zu Weiß entsättigt oder korrigiert werden. Andererseits lassen sich Farbauszüge für Farben kleiner oder großer Farbsättigung herstellen, wobei die stark gesättigten bzw. die ungesättigten Farben zu Weiß korrigiert werden.

Fig. 7 zeigt ein Ausführungsbeispiel für das optoelektronische Abtastorgan 3. Das von der Farbvorlage 1 reflektierte oder durchgelassene Abtastlicht 51 gelangt durch Objektive 52 und 53 und durch eine Blende 54 in das Abtastorgan 3 und wird dort mittels zweier dichroitischer Farbteiler 55 und 56 in drei Teilbündel 57, 58 und 59 aufgespalten. Die Teilbündel 57, 58 und 59 fallen durch Korrektur-Farbfilter 60, 61 und 62 auf optoelektronische Wandler 63, 64 und 65, die das empfangene Teillicht entsprechend in Intensitäten der Grundfarben-Anteile an den abgetasteten Farben in die primären Farbmeßwert-Signale R, G und B umwandeln.

Fig. 8 zeigt ein Ausführungsbeispiel für die Transformations-Stufe 18.

In der Transformations-Stufe 18 werden die Chrominanz-Signale $x_0$ und $y_0$ des ausgewählten Auszugsfarbtons $T_0$ während eines Abgleichvorganges durch monotone Änderung des Winkels $\alpha$ so gedreht, daß die gedrehten Chrominanz-Signale $x'_0 > 0$ und $y' = 0$ sind, wobei der dabei gefundene Winkel $\alpha_0$ festgehalten wird. Diese Koordinaten-Drehung läuft gemäß Gleichung (3) ab.

Während der punkt- und zeilenweisen Abtastung der Farbvorlage 1 werden dann die laufend erzeugten Chrominanz-Signale x und y gemäß Gleichung (4) gedreht.

Die Transformations-Stufe 18 besteht aus vier Multiplizier-Stufen 66, 67, 68 und 69, einer Addier-Stufe 70, einer Subtrahier-Stufe 71, einem Festwert-Speicher 72, einem Adreßzähler 73, einer Tor-Stufe 74, einem Taktgenerator 75 sowie aus einer Überwachungs-Stufe 76.

Die Multiplizier-Stufen 66, 67, 68 und 69 sind in vorteilhafter Weise aus multiplizierenden D/A-Wandlern, z. B. aus integrierten Bausteinen vom Typ AD 7542 der Firma Analog Devices, aufgebaut. In einem solchen multiplizierenden D/A-Wandler kann ein wählbarer Faktor in Form von Digitalwerten über einen Dateneingang eingegeben werden, die in einem internen Register speicherbar sind. Ein am Eingang des multiplizierenden D/A-Wandlers anstehendes analoges Signal wird mit dem eingestellten Faktor multipliziert, wobei das Produkt wiederum als analoges Signal am Ausgang des multiplizierenden D/A-Wandlers zur Verfügung steht.

Während des Abgleichvorganges wird das von der gestrichelt angedeuteten Umformer-Stufe 17 kommende Chrominanz-Signal $x_0$ auf die Eingänge 77 und 78 der Multiplizier-Stufen 66 und 67 gegeben, während das Chrominanz-Signal $y_0$ auf die Eingänge 79 und 80 der Multiplizier-Stufen 68 und 69 gelangt. Im Festwert-Speicher 72 sind für Winkelwerte von 0 bis 360° die entsprechenden Sinus- und Kosinus-Werte als Digitalwerte $b = e = \cos \alpha$ und $c = d = \sin \alpha$ durch die zugehörigen Winkelwerte $\alpha$ als Adressen des Festwert-Speichers 72 abrufbar gespeichert. Der Daten-Ausgang 81 des Festwert-Speichers 72 für die Digitalwerte $b = e = \cos \alpha$ ist über einen Daten-Bus 82 mit den Daten-Eingängen 83 und 84 der Multiplizier-Stufen 66 und 69 und der entsprechende Daten-Ausgang 85 für die Digitalwerte $c = d = \sin \alpha$ über einen Daten-bus 86 mit den Daten-Eingängen 87 und 88 der Multiplizier-Stufen 67 und 68 verbunden.

Der einschaltbare Taktgenerator 75 steht über die Tor-Stufe 74 ·mit dem Takteingang 89 des Adreßzählers 73 in Verbindung. Der Ausgang 90 des Adreßzählers 73 ist über einen Adreß-Bus 91 an den Adreß-Eingang 92 des Festwert-Speichers 72 angeschlossen. Die Ausgänge 93 und 94 der Multiplizier-Stufen 66 und 68 stehen mit der Addier-Stufe 70 und die Ausgänge 95 und 96 der Multiplizier-Stufen 67 und 69 mit der Subtrahier-Stufe 71 in Verbindung. Der Ausgang der Addier-Stufe 70 und der Ausgang der Subtrahier-Stufe 71 sind an die Überwachungs-Stufe 76 für die Bedingungen $x'_0 > 0$ und $y'_0 = 0$ angeschlossen. Die Überwachungs-Stufe 76 steht mit einem Steuereingang 97 der Tor-Stufe 74 in Verbindung.

Der Abgleichvorgang wird durch Einschalten des Taktgenerators 75 mit Hilfe einer Taste 98 eingeleitet. Der Zähltakt des Taktgenerators 75 wird in den Adreßzähler 73, der vorher rückgesetzt wurde,

eingezählt, wobei der ansteigende Zählerstand momentan ansteigenden Winkelwerten entspricht. Der Adreßzähler 73 ruft nacheinander die Adressen des Festwert-Speichers 72 auf, die zu den Winkelwerten gehörenden Digitalwerte cos $\alpha$ und sin $\alpha$ werden in die Multiplizier-Stufen 66, 67, 68 und 69 übertragen und dort mit den entsprechenden Chrominanz-Signalen $x_0$ und $y_0$ multipliziert. Die Einzelprodukte werden addiert bzw. voneinander subtrahiert, so daß an dem Ausgang der Addier-Stufe 70 das gedrehte Chrominanz-Signal $x'_0$ und am Ausgang der Subtrahier-Stufe 71 das gedrehte Chrominanz-Signal $y'_0$ erscheint. Dabei werden die gedrehten Chrominanz-Signale $x'_0$ und $y'_0$ laufend von der Überwachungs-Stufe 76 überprüft.

Die Überwachungs-Stufe 76 gibt ein Steuersignal an die Tor-Stufe 74 ab, wenn die Bedingungen erfüllt sind, wodurch der Zähltakt unterbrochen wird. Der dabei erreichte und fixierte Zählerstand im Adreßzähler 73 entspricht dem gesuchten Winkel $\alpha_0$.

Fig. 9 zeigt ein Ausführungsbeispiel für den Farbsättigungs-Signalgenerator 42 zur Erzeugung des Farbsättigungs-Signals S' aus den Farbmeßwert-Signalen R, G und B.

Die vom nicht dargestellten optoelektronischen Abtastorgan 3 gelieferten Farbmeßwert-Signale R, G und B werden in einer Logarithmier-Stufe 99 logarithmiert oder teillogarithmiert und gleichzeitig einer Maximumauswahl-Stufe 100 und einer Minimumauswahl-Stufe 101 zugeführt, welche aus den Farbmeßwert-Signalen R, G und B die maximalen und minimalen Farbmeßwerte feststellen. In einer der Maximumauswahl-Stufe 100 und der Minimumauswahl-Stufe 101 nachgeschalteten Differenz-Stufe 102 wird das Farbsättigungs-Signal S' als Differenzsignal aus den festgestellten maximalen und minimalen Farbmeßwerten gebildet.

**Patentansprüche**

1. Verfahren zur Herstellung von Farbauszügen einer Farbvorlage für den Einzelfarbendruck, bei dem

a) die Farbvorlage zur Gewinnung von Farbmeßwert-Signalen mittels eines optoelektronischen Abtastorgans punkt- und zeilenweise trichromatisch abgetastet wird,

b) ein Erkennungsbereich abgegrenzt und ein Auszugs-Signal erzeugt wird, wenn die Farbmeßwert-Signale in den abgegrenzten Erkennungsbereich fallen, und

c) der Farbauszug durch ein vom Auszugs-Signal gesteuertes Aufzeichnungsorgan punkt- und zeilenweise aufgezeichnet wird, dadurch gekennzeichnet, daß

vor der Aufzeichnung des Farbauszuges

d) der Farbort ($F_0$) eines ausgewählten Auszugsfarbtons ($T_0$) einer Vorlagenfarbe durch Farbwerte ($R_0$, $G_0$, $B_0$) festgelegt wird,

e) der Farbort ($F_0$) des Auszugsfarbtons ($T_0$) durch eine erste Transformation seiner Farbwerte ($R_0$, $G_0$, $B_0$) in Chrominanzwerte ($x'_0$, $y'_0$), derart in die Chrominanzebene des Chrominanz/Luminanz-Farbraumes transformiert wird, daß der transformierte Farbort ($F'_0$) auf einem der Achsenabschnitte eines X'Y'-Farbkoordinatensystems (20) in der Chrominanzebene liegt, und die dazu erforderlichen Transformationskoeffizienten festgehalten werden, daß während der Aufzeichnung des Farbauszuges

f) die Farborte (F) der Farbtöne der abgetasteten Vorlagenfarben laufend durch eine zweite Transformation der Farbmeßwert-Signale (R, G, B) in Chrominanzwerte (x', y') mit den zuvor ermittelten Transformationskoeffizienten in die Chrominanzebene transformiert werden,

g) diejenigen Chrominanzwerte (x', y') ausgewählt werden, deren zugehörige transformierte Farborte (F') in derselben Hälfte des X'Y'-Farbkoordinatensystems (20) liegen wie der transformierte Farbort ($F'_0$) des Auszugsfarbtons ($T_0$),

h) aus mindestens denjenigen Chrominanzwerten (y'), welche den betragsmäßigen Abständen der transformierten Farborte (F') von dem betreffenden Achsenabschnitt entsprechen, ein Farbton-Signal (T') abgeleitet wird, welches näherungsweise ein Maß für die betragsmäßigen Farbton-Abweichungen der Farbtöne der abgetasteten Vorlagenfarben von dem Auszugsfarbton ($T_0$) ist,

i) aus einem im wesentlichen konstanten Hilfssteuer-Signal ($H_0$) und dem Farbton-Signal (T') ein Farbton-Steuersignal (T*) gewonnen wird, welches seinen größten Wert beim Abtasten des Auszugsfarb-tons ($T_0$) und den Wert Null beim Abtasten eines Farbtons mit einer vorgegebenen maximalen Farbton-Abweichung vom Auszugsfarbton ($T_0$) hat, wodurch ein sektorförmiger Farbton-Erkennungsbereich (21) um den betreffenden Achsenabschnitt bzw. um den Auszugsfarbton ($T_0$) abgegrenzt wird, und

j) das Farbton-Steuersignal (T*) zur Bildung des Auszugs-Signals (A) für den Farbauszug des ausgewählten Auszugsfarbtons ($T_0$) verwendet wird.

2. Verfahren nach Anspruch 1, dadurch gekennzeichnet, daß das Farbton-Signal (T') als Quotient aus den ausgewählten betragsmäßigen Chrominanzwerten (x', y') gewonnen wird, welcher dem Tangens des Winkels ($\beta$) entspricht, der von dem betreffenden Achsenabschnitt und einer Verbindungslinie zwischen Koordinatenursprung und den transformierten Farborten (F') der Farbtöne der abgetasteten Vorlagenfarben eingeschlossen wird.

3. Verfahren nach Anspruch 1 oder 2, dadurch gekennzeichnet, daß das Farbton-Steuersignal (T*) durch Differenzbildung zwischen dem Hilfssteuersignal ($H_0$) und dem Farbton-Signal (T') gewonnen wird.

4. Verfahren nach einem der Ansprüche 1 bis 3, dadurch gekennzeichnet, daß zur Eingrenzung von Auszugsfarben

a) ein Farbsättigungs-Signal (S') und aus mindestens einem der Farbmeßwerte (R, G, B) ein Luminanz-Signal (L') erzeugt werden,

b) durch amplitudenmäßige und/oder nichtlineare Änderung des Farbsättigungs-Signals (S') ein Farbsättigungs-Steuersignal (S*) abgeleitet wird,

c) durch Differenzbildung aus einem Spannungswert (W) und dem Luminanz-Signal (L') und durch amplitudenmäßige und/oder nichtlineare Änderung des Differenz-Signals ein Luminanz-Steuersignal (L*) gebildet wird, und

d) zur Bildung des Auszugs-Signals (A) für den Farbauszug der Auszugsfarbe das Farbton-Steuersignal (T*) zusätzlich mit dem Farbsättigungs-Steuersignal (S*) und/oder dem Luminanz-Steuersignal (L*) verknüpft wird, wobei Farbsättigungs-Steuersignal (S*) und Luminanz-Steuersignal (L*) derart gebildet und mit dem Farbton-Steuersignal (T*) verknüpft werden, daß der Farbauszug der Auszugsfarbe bei abnehmenden Farbsättigungswerten und zunehmenden Helligkeitswerten mit abnehmenden Dichtewerten aufgezeichnet wird.

5. Verfahren nach Anspruch 4, dadurch gekennzeichnet, daß der Spannungswert (W) dem Weißpegel entspricht, auf den die beim Ausmessen der hellsten, neutralen Bildstelle der Farbvorlage festgestellten Farbwerte (R, G, B) abgeglichen werden.

6. Verfahren nach einem der Ansprüche 1 bis 5, dadurch gekennzeichnet, daß zur Erzeugung des Farbsättigungs-Signals (S')

a) aus den Farbmeßwerten (R, G, B) jeweils die maximalen und minimalen Farbmeßwerte ausgewählt werden, und

b) das Farbsättigungs-Signal (S') aus den Differenzen von maximalen und minimalen Farbmeßwerten gebildet wird.

7. Verfahren nach einem Ansprüche 1 bis 5, dadurch gekennzeichnet, daß das Farbsättigungs-Signal (S') näherungsweis aus den ausgewählten Chrominanzwerten (x') in Richtung des betreffenden Achsenabschnittes des X'Y'-Farbkoordinatensystems (20) gebildet wird.

8. Verfahren nach Anspruch 4, dadurch gekennzeichnet, daß das Farbton-Steuersignal (T*), das Farbsättigungs-Steuersignal (S*) und das Luminanz-Steuersignal (L*) multiplikativ zum Auszugs-Signal (A) verknüpft werden.

9. Verfahren nach Anspruch 4, dadurch gekennzeichnet, daß das Farbsättigungs-Steuersignal (S*) und das Luminanz-Steuersignal (L*) multiplikativ zu einem Steuersignal verknüpft werden und daß das Auszugs-Signal (A) durch Ein- und Ausschalten des Farbton-Steuersignals (T*) in Abhängigkeit vom Steuersignal gebildet wird.

10. Verfahren nach einem der Ansprüche 1 bis 9, dadurch gekennzeichnet, daß das Farbsättigungs-Steuersignal (S*) von dem Farbsättigungswert Null bis zu einem Grenz-Farbsättigungswert $(x_g)$, welcher die Ausdehnung eines Graubereiches um die Luminanz-Achse (Z) des Chrominanz/Luminanz-Farbraumes definiert, Null ist und von dem Grenz-Farbsättigungswert $(x_g)$ bis zu maximalen Farbsättigungswerten einen konstanten Wert hat.

11. Verfahren nach einem der Ansprüche 1 bis 10, dadurch gekennzeichnet, daß die Farbwerte $(R_0, G_0, B_0)$ des Auszugsfarbtons $(T_0)$ durch optoelektronisches Ausmessen eines entsprechenden Farbtones in der Farbvorlage festgestellt werden.

12. Verfahren nach einem der Ansprüche 1 bis 11, dadurch gekennzeichnet, daß die vorgegebene maximale Farbton-Abweichung von dem Auszugsfarbton $(T_0)$ bzw. der Öffnungswinkel des Farbton-Erkennungsbereiches (21) durch Amplitudenänderung der Chrominanzwerte (y') senkrecht zum betreffenden Achsenabschnitt, des Farbton-Signals (T') oder des Hilfssteuersignals $(H_0)$ eingestellt wird.

13. Verfahren nach einem der Ansprüche 1 bis 12, dadurch gekennzeichnet, daß die erste Transformation der Farbwerte $(R_0, G_0, B_0)$ des Auszugsfarbtons $(T_0)$ in die Chrominanzwerte $(x'_0, Y'_0)$

a) durch eine Matrizierung der Farbmeßwerte $(R_0, G_0, B_0)$ in die Chrominanzwerte $(x_0, y_0)$ eines XY-Farbkoordinatensystems (19) in der Chrominanzebene entsprechend einer Transformation des RGB-Farbraumes in den Chrominanz/Luminanz-Farbraum nach den Gleichungen :

$$x_0 = a_{11}R_0 + a_{12}G_0 + a_{13}B_0$$
$$Y_0 = a_{21}R_0 + a_{22}G_0 + a_{23}B_0$$

b) und durch eine von der Lage des Farbortes $(F_0)$ des Auszugsfarbtons $(T_0)$ innerhalb der Chrominanzebene abhängige Koordinatendrehung der Chrominanzwerte $(x_0, y_0)$ des XY-Farbkoordinatensystems (19) in die Chrominanzwerte $(x'_0, y'_0)$ des gegenüber dem XY-Farbkoordinatensystem (19) um einen Winkel $(\alpha)$ gedrehten X'Y'-Farbkoordinatensystems (20) entsprechend einer Drehung des Chrominanz/Luminanz-Farbraumes um die Luminanzachse (Z) nach den Gleichungen .

$$x'_0 = x_0 \cos\alpha + y_0 \sin \alpha$$
$$y'_0 = -x_0 \sin \alpha + y_0 \cos \alpha$$

erfolgt, wobei der Winkel $(\alpha_0)$ als Transformationskoeffizient so bestimmt wird, daß der transformierte Farbort $(F'_0)$ des Auszugsfarbtones $(T_0)$ auf einem der Achsenabschnitte des X'Y'-Farbkoordinatensystems (20) liegt.

14. Verfahren nach einem der Ansprüche 1 bis 13, dadurch gekennzeichnet, daß die zweite Transformation der Farbmeßwerte (R, G, B) der Farbtöne der abgetasteten Vorlagenfarben in die Chrominanzwerte (x', y') der transformierten Farborte (F')

a) durch eine Matrizierung der Farbmeßwerte (R, G, B) in die Chrominanzwerte (x, y) des XY-Farbkoordinatensystems (19) in der Chrominanzebene entsprechend einer Transformation des RGB-Farbraumes in den Chrominanz/Luminanz-Farbraum nach den Gleichungen :

$$x = a_{11}R + a_{12}G + a_{13}B$$
$$y = a_{21}R + a_{22}G + a_{23}B$$

b) und durch eine Koordinatendrehung der Chrominanzwerte (x, y) des XY-Farbkoordinatensystems (19) in die Chrominanzwerte (x', y') des X'Y'-Farbkoordinatensystems (20) um den festgestellten Winkel ($\alpha_0$) nach den Gleichungen :

$$x' = x \cos \alpha_0 + y \sin \alpha_0$$
$$y' = - x \sin \alpha_0 + y \cos \alpha_0$$

erfolgt.

15. Verfahren nach Anspruch 13, dadurch gekennzeichnet, daß der Winkel ($\alpha$) durch einen automatischen Abgleichvorgang verändert wird, bis einer der Chrominanzwerte ($x'_0$ bzw. $y'_0$) im X'Y'-Farbkoordinatensystem (20) zu Null wird, wobei der dabei gefundene Winkel ($\alpha_0$) als Transformationskoeffizient festgehalten wird.

16. Einrichtung zur Herstellung von Farbauszügen von einer Farbvorlage für den Einzelfarben-Druck mit

a) einem optoelektronischen Abtastorgan für die Farbvorlage zur Gewinnung von Farbmeßwert-Signalen,

b) einer Schaltung zur Erzeugung eines Auszugs-Signals und mit

c) einem an die Schaltung zur Erzeugung des Auszugs-Signals angeschlossenen Aufzeichnungsorgans zur punkt- und zeilenweisen Aufzeichnung der Farbauszüge, dadurch gekennzeichnet, daß die Schaltung zur Erzeugung des Auszugs-Signals (A) folgende Komponenten aufweist :

d) eine Transformations-Schaltung (17, 18), welche mit dem optoelektronischen Abtastorgan (3) verbunden ist und die Farbmeßwerte ($R_0$, $G_0$, $B_0$ bzw. R, G, B) in Chrominanzwerte ($x'_0$, $y'_0$ bzw. x', y') eines X'Y'-Farbkoordinatensystems (20) in der Chrominanzebene des Chrominanz/Luminanz-Farbraumes umwandelt,

e) eine Auswahl- und Betrags-Schaltung (26, 28), welche an die Transformations-Schaltung (17, 18) angeschlossen ist, zur Auswahl und Betragsbildung von Chrominanzwerten (+ x', |y'|),

f) Einstellmittel (29) zur Abgrenzung eines Farbton-Erkennungsbereiches, welche an die Auswahl- und Betrags-Schaltung (26, 28) angeschlossen sind,

g) eine Dividier-Stufe (32), die mit den Einstellmitteln (29) in Verbindung steht, zur Bildung eines Farbton-Signals (T') aus den Beträgen der ausgewählten Chrominanzwerte,

h) eine Differenz-Stufe (33), welche mit der Dividier-Stufe (32) und dem Aufzeichnungsorgan (7) in Verbindung steht, zur Bildung eines Farbton-Steuersignals (T*) für das Auszugs-Signal (A).

17. Einrichtung nach Anspruch 16, dadurch gekennzeichnet, daß die Schaltung zur Erzeugung des Auszungs-Signals (A) zur Abgrenzung von Auszugsfarben zusätzlich folgende Komponenten aufweist :

a) einen Farbsättigungs-Signalgenerator (42) und einen Luminanz-Signalgenerator (36), welche an das optoelektronische Abtastorgan (3) angeschlossen sind, zur Gewinnung eines Farbsättigungs-Signals (S') und eines Luminanz-Signals (L') aus den Farbmeßwert-Signalen (R, G, B),

b) einstellbare Signalformer-Stufen (37, 44), die den Signalgeneratoren (36, 42) nachgeschaltet sind, zur Erzeugung eines Farbsättigungs-Steuersignals (S*) und eines Luminanz-Steuersignals (L*) und

c) eine Verknüpfungs-Stufe (16), die mit der Differenz-Stufe (33), den Signalformer-Stufen (37, 44) und dem Aufzeichnungsorgan (7) verbunden ist, zur wahlweisen Verknüpfung des Farbton-Steuersignals (T*) mit dem Farbsättigungs-Steuersignal (S*) und/oder dem Luminanz-Steuersignal (L*) zur Bildung des Auszugs-Signals (A).

18. Einrichtung nach Anspruch 17, dadurch gekennzeichnet, daß die Verknüpfungs-Stufe (16) als Multiplizierer ausgebildet ist.

## Claims

1. Method for producing colour separations of a coulour original for single colour printing, in which

a) the colour original is scanned trichromatically dot by dot and line by line by means of an optoelectronic scanning element to obtain colour value signals,

b) a recognition area is delimited and a separation signal is generated when the colour value signals intervene in the delimited recognition area and

c) the colour separation is recorded dot by dot and line by line by means of a recording unit controlled by the separation signal, characterized in that prior to recording the colour separation

d) the colour location $(F_0)$ of a selected separation hue $(T_0)$ of an original colour is defined by colour values $(R_0, G_0, B_0)$,

e) the colour location $(F_0)$ of the separation hue $(T_0)$ is transposed into the chrominance plane of the chrominance/luminance colour space by means of a first transformation of its colour values $(R_0, G_0, B_0)$ into chrominance values $(x'_0, y'_0)$, in such manner that the transposed colour location $(F'_0)$ is situated on one of the axis sections of an X'Y' colour co-ordinate system (20) in the chrominance plane and the transformation factors required for this purpose are stored, that during the recording of the colour separation

f) the colour location (F) of the hues of the original colours scanned are currently transposed into the chrominance plane by a second transformation of the colour value signals (R, G, B) into chrominance values (x', y') by means of the previously determined transformation factors,

g) the chrominance values (x', y') are selected whose associated transposed colour locations (F') are situated in the same half of the X'Y' colour co-ordinate system (20) as the transposed colour location $(F'_0)$ of the separation hue $(T_0)$,

h) a hue signal (T') which as an approximation is a measure for the quantitative hue deviations of the hues of the original colours from the separation hue $(T_0)$, is derived from at least those chrominance values (y') which correspond to the quantitative spacings of the transposed colour locations (F') from the axis section in question,

i) a hue control signal (T*) is obtained from a substantially constant auxiliary control signal $(H_0)$ and the hue signal (T'), which has its maximum value during the scanning of the separation hue $(T_0)$ and the value zero during the scanning of a hue having a preset maximum hue deviation from the separation hue $(T_0)$, thereby delimiting a sector-shaped hue recognition area (21) around the axis section in question or around the separation hue $(T_0)$, and

j) the hue control signal (T*) is utilized to generate the separation signal (A) for the colour separation of the separation hue $(T_0)$ selected.

2. Method according to claim 1, characterized in that the hue signal (T') is obtained as a quotient from the selected quantitative chrominance values (x', y'), which corresponds to the tangent of the angle $(\beta)$ which is subtended between the corresponding axis section and a connecting line between the co-ordinate origin and the transposed colour locations (F') of the hues of the original colours scanned.

3. Method according to claim 1 or 2, characterized in that the hue control signal (T*) is obtained by establishing the difference between the auxiliary control signal $(H_0)$ and the hue signal (T').

4. Method according to one of the claims 1 to 3, characterized in that for the purpose of delimiting separation colours

a) a colour saturation signal (S') and a luminance signal (L') are generated from at least one of the colour values (R, G, B),

b) a colour saturation control signal (S*) is derived by amplitude-based and/or non-linear variation of the colour saturation signal (S'),

c) a luminance control signal (L*) is obtained by establishing the difference between a voltage value (W) and the luminance signal (L') and by amplitude-based and/or non-linear variation of the difference signal, and

d) the hue control signal (T*) is complementarily combined with the colour saturation control signal (S*) and/or the luminance control signal (L*) to generate the separation signal (A) for the colour separation of the separation colour, the colour saturation control signal (S*) and the luminance control signal (L*) being so formed and combined with the hue control signal (T*) that the colour separation of the separation colour is recorded with diminishing density values in the case of decreasing colour saturation values and increasing brightness values.

5. Method according to claim 4, characterized in that the voltage value (W) corresponds to the white level to which are matched the colour values (R, G, B) determined during measurement of the brightest neutral image spot of the colour original.

6. Method according to one of the claims 1 to 5, characterized in that for the purpose of generating the colour saturation signal (S')

a) the maximum and minimum colour values are selected in each case from the colour values (R, G, B), and

b) the colour saturation signal (S') is generated from the differences of the maximum and minimum colour values.

7. Method according to one of the claims 1 to 5, characterized in that as an approximation, the colour saturation signal (S') is formed from the selected chrominance values (x') in the direction of the corresponding axis section of the X'Y' colour co-ordinate system (20).

8. Method according to claim 4, characterized in that the hue control signal (T*), the colour saturation control signal (S*) and the luminance control signal (L*) are combined by way of multiplication into the separation signal (A).

9. Method according to claim 4, characterized in that the colour saturation control signal (S*) and the luminance control signal (L*) are combined into a control signal by way of multiplication and that the separation signal (A) is obtained by switching the hue control signal (T*) on and off as a function of the control signal.

10. Method according to one of the claims 1 to 9, characterized in that the colour saturation control signal (S*) is zero from the colour saturation value zero up to a colour saturation limit value ($x_g$) which defines the extension of a grey area around the luminance axis (Z) of the chrominance/luminance colour space, and has a constant value from the colour saturation limit value ($x_g$) up to the maximum colour saturation values.

11. Method according to one of the claims 1 to 10, characterized in that the colour values ($R_0$, $G_0$, $B_0$) of the separation hue ($T_0$) are determined by opto-electronic measurement of a corresponding hue in the colour original.

12. Method according to one of the claims 1 to 11, characterized in that the preset maximum hue deviation from the separation hue ($T_0$) or rather the aperture angle of the hue recognition area (21), is set up by amplitude variation of the chrominance values (y') at right angles to the corresponding axis section, of the hue signal (T') or of the auxiliary control signal ($H_0$).

13. Method according to one of the claims 1 to 12, characterized in that the first transformation of the colour values ($R_0$, $G_0$, $B_0$) of the separation hue ($T_0$) into the chrominance values ($x'_0$, $y'_0$) is performed

a) by matrixing the colour values ($R_0$, $G_0$, $B_0$) of the separation hue ($T_0$) into the chrominance values ($x_0$, $y_0$) of an XY colour co-ordinate system (19) in the chrominance plane corresponding to a transformation of the RGB colour space into the chrominance/luminance colour space in accordance with the equations .

$$x_0 = a_{11}R_0 + a_{12}G_0 + a_{13}B_0$$
$$Y_0 = a_{21}R_0 + a_{22}G_0 + a_{23}B_0$$

b) and by a co-ordinate rotation, depending on the position of the colour location ($F_0$) of the separation hue ($T_0$) within the chrominance plane, of the chrominance values ($x_0$, $y_0$) of the XY colour co-ordinate system (19) into the chrominance values ($x'_0$, $y'_0$) of the X'Y' colour co-ordinate system (20) rotated through an angle ($\alpha$) with respect to the XY colour co-ordinate system (19) corresponding to a rotation of the chrominance/luminance colour space around the luminance axis (Z) in accordance with the equations :

$$x'_0 = x_0 \cos \alpha + y_0 \sin \alpha$$
$$y'_0 = - x_0 \sin \alpha + y_0 \cos \alpha$$

the angle ($\alpha_0$) being so determined as a transformation factor that the transposed colour location ($F'_0$) of the separation hue ($T_0$) is situated on one of the axis sections of the X'Y' colour co-ordinate system (20).

14. Method according to one of the claims 1 to 13, characterized in that the second transformation of the colour values (R, G, B) of the hues of the original colours scanned into the chrominance values (x', y') of the transposed colour locations (F') is performed

a) by matrixing the colour values (R, G, B) into the chrominance values (x, y) of the XY colour co-ordinate system (19) in the chrominance plane corresponding to a transformation of the RGB colour space into the chrominance/luminance colour space in accordance with the equations :

$$x = a_{11}R + a_{12}G + a_{13}B$$
$$Y = a_{21}R + a_{22}G + a_{23}B$$

b) and by a co-ordinate rotation of the chrominance values (x, y) of the XY colour co-ordinate system (19) into the chrominance values (x'y') of the X'Y' colour co-ordinate system (20) through the angle ($\alpha_0$) determined, in accordance with the equations :

$$x' = x \cos \alpha_0 + y \sin \alpha_0$$
$$y' = - x \sin \alpha_0 + y \cos \alpha_0.$$

15. Method according to claim 13, characterized in that the angle ($\alpha$) is varied by means of an automatic balancing process until one of the chrominance values ($x'_0$ or $y'_0$, respectively) becomes zero in the X'Y' colour co-ordinate system (20), the angle ($\alpha_0$) determined whilst doing so being retained as the transformation factor.

16. Apparatus for the production of colour separation from a colour original for single colour printing, comprising

a) an opto-electronic scanning unit for the colour original, for securing colour value signals,

b) a circuit for generating a separation signal, and

c) a recording unit connected to the circuit for generating the separation signal, for dot-by-dot and line-by-line recording of the colour separations, characterized in that the circuit for generating the separation signal (A) has the following components :

d) a conversion circuit (17, 18) which is connected to the opto-electronic scanning unit (3) and

12

converts the colour values ($R_0$, $G_0$, $B_0$ and R, G, B, respectively) into chrominance values ($x'_0$, $y'_0$ and $x'y'$ respectively) of an X'Y' colour co-ordinate system (20) in the chrominance plane of the chrominance/luminance colour space

e) a selector and quantifier circuit (26, 28) which is connected to the conversion circuit (17, 18), for selection and quantification of chrominance values (+ x', |y'|),

f) adjusting devices (29) for delimiting a hue recognition area, which are connected to the selector and quantifier circuit (26, 28),

g) a divider stage (32) in communication with the adjusting devices (29) for generating a hue signal (T') from the quantities of the chrominance values selected.

h) a differentiator state (33) which is in communication with the divider stage (32) and the recording unit (7) for generating a hue control signal (T*) as the separation signal (A).

17. Apparatus according to claim 16, characterized in that the circuit for generating the separation signal (A) complementarily has the following components for delimitation of separation colours :

a) a colour saturation signal generator (42) and a luminance signal generator (36) which are connected to the opto-electronic scanning unit (3) for securing a colour saturation signal (S') and a luminance signal (L') from the colour value signals (R, G, B),

b) adjustable signal shaper stages (37, 44) which are post-connected to the signal generators (36, 42) for generating a colour saturation control signal (S*) and a luminance control signal (L*), and

c) an interlinking stage (16) which is connected to the differential stage (33), the signal shaper stages (37, 44) and the recording unit (7), for optional interlinkage of the hue control signal (T*) with the colour saturation control signal (S*) and/or the luminance control signal (L*), for generating the separation signal (A).

18. Apparatus according to claim 17, characterized in that the interlinking stage (16) is constructed as a multiplier.

## Revendications

1. Procédé pour réaliser des extraits de couleur d'un modèle en couleur pour l'impression avec des couleurs singulières, selon lequel :

a) on détecte le modèle de couleur pour obtenir des signaux de grandeur de mesure de couleur à l'aide d'un organe de détection opto-électronique, de manière trichrome point par point et ligne par ligne,

b) on délimite une zone de reconnaissance et on génère un signal d'extrait lorsque les signaux de grandeur de mesure de couleur tombent dans la zone de reconnaissance délimitée et

c) on inscrit l'extrait de couleur à l'aide d'un organe d'inscription commandé par le signal de l'extrait de couleur, l'inscription se faisant point par point et ligne par ligne, caractérisé en ce que, avant l'inscription de l'extrait de couleur :

d) on détermine le lieu de la couleur ($F_0$) d'une teinte d'extrait de couleur ($T_0$) choisie d'une couleur du modèle par des valeurs de couleur ($R_0$, $G_0$, $B_0$),

e) on transforme le lieu de couleur ($F_0$) de la teinte de couleur de l'extrait ($T_0$) par une première transformation de ces valeurs de couleur ($R_0$, $G_0$, $B_0$) en des valeurs de chrominance ($x'_0$, $y'_0$) de façon que les plans de chrominance de l'espace couleur chrominance/luminance soient transformés, en ce que le lieu de couleur ($F'_0$ transformé est situé sur l'un des segments d'axe d'un système de coordonnées de couleur (X'Y') (20) dans le plan de chrominance et on conserve les coefficients de transformation nécessaires, en ce que pendant l'inscription de l'extrait de couleur :

f) on transforme les lieux de couleur (F) des teintes de couleur des couleurs de modèle détectées, en continu à l'aide d'une seconde transformation des signaux de grandeurs de mesure de couleur (R, G, B) en des grandeurs de chrominance (x', y') à l'aide des coefficients de transformation déterminés précédemment dans le plan de chrominance,

g) on choisit celles des valeurs de chrominance (x', y') dont les lieux de couleur (F') transformés correspondants se trouvent dans la même moitié du système de coordonnées de couleur (X'Y') (20) que le lieu de couleur transformé ($F'_0$) de la teinte d'extrait de couleur ($T_0$),

h) on dérive un signal de teinte de couleur (T') à partir d'au moins celles des valeurs de chrominance (y') qui correspondent aux distances en valeur des lieux de couleurs (F') transformés à partir des segments d'axe correspondants, signal de teinte qui constitue approximativement une mesure des déviations de teinte en valeur des teintes de couleur des couleurs de modèle détectées de la teinte d'extrait de couleur ($T_0$),

i) on forme un signal de commande de teinte de couleur (T*) à partir d'un signal de commande auxiliaire ($H_0$) principalement constant et du signal de teinte (T'), signal de commande ayant sa plus grande valeur à la détection de la teinte d'extrait de couleur ($T_0$) et la valeur nulle à la détection d'une teinte de couleur présentant la déviation de teinte de couleur maximale prédéterminée par rapport à la teinte d'extrait de couleur ($T_0$), pour délimiter une zone de reconnaissance de teinte (21) en forme de secteur autour du segment d'axe correspondant ou de la teinte d'extrait de couleur ($T_0$) et

j) on utilise le signal de commande de teinte de couleur (T*) pour former le signal d'extrait (A) pour l'extrait de couleur de la teinte d'extrait de couleur ($T_0$) choisie.

13

**0 144 463**

2. Procédé selon la revendication 1, caractérisé en ce que le signal de teinte de couleur (T') s'obtient comme quotient des valeurs de chrominance (x', y') en grandeurs, choisies, correspondant à la tangente de l'angle ($\beta$) compris entre le segment d'axe correspondant et la ligne de jonction entre l'origine des coordonnées et les lieux de couleur (F') transformés des teintes de couleur des couleurs de modèle détectées.

3. Procédé selon la revendication 1 ou 2, caractérisé en ce que le signal de commande de teinte de couleur (T*) s'obtient en formant la différence entre le signal de commande auxiliaire ($H_0$) et le signal de teinte de couleur (T').

4. Procédé selon l'une des revendications 1 à 3, caractérisé en ce que pour délimiter des extraits de couleur :

a) on forme un signal de saturation de couleur (S') et partant d'au moins l'une des grandeurs de mesure de couleur (R, G, B), on forme le signal de luminance (L'),

b) par une variation en amplitude et/ou non linéaire du signal de saturation de couleur (S'), on dérive un signal de commande de saturation de couleur (S*),

c) en formant la différence à partir d'une valeur de tension (W) et du signal de luminance (L') et par une modification en amplitude et/ou non linéaire du signal de différence, on forme un signal de commande de luminance (L*) et,

d) pour former le signal d'extrait (A) pour l'extrait de couleur de la couleur d'extrait du signal de commande de teinte (T*), on combine en outre le signal de commande de teinte (T') au signal de commande de saturation de couleur (S*) et/ou le signal de commande de luminance (L*), et on forme le signal de commande de saturation de couleur (S*) et le signal de commande de luminance (L*) de façon qu'ils soient combinés au signal de commande de teinte (T*) pour que l'extrait de couleur de la couleur d'extrait soit inscrit avec des densités décroissantes en fonction décroissante des valeurs de saturation de couleur et en fonction croissante des valeurs de luminosité.

5. Procédé selon la revendication 4, caractérisé en ce que la valeur de tension (W) correspond au niveau du blanc suivant lequel on équilibre les valeurs de couleur (R, G, B) déterminées en mesurant le point-image neutre le plus clair du modèle de couleur.

6. Procédé selon l'une des revendications 1 à 5, caractérisé en ce que pour former le signal de saturation de couleur (S'),

a) on choisit chaque fois les grandeurs de mesure de couleur maximales et minimales à partir des grandeurs de mesure de couleur (R, G, B) et,

b) on forme le signal de saturation de couleur (S') à partir de la différence entre les grandeurs de mesure de couleur maximales et minimales.

7. Procédé selon l'une des revendications 1 à 5, caractérisé en ce qu'on forme le signal de saturation de couleur (S') par approximation à partir des grandeurs de chrominance (x') choisies dans le sens du segment d'axe correspondant du système de coordonnées de couleur (X'Y') (20).

8. Procédé selon la revendication 4, caractérisé en ce qu'on combine le signal de commande de teinte de couleur (T*), le signal de commande de saturation de couleur (S*) et le signal de commande de luminance (L*) par multiplication à partir du signal d'extrait (A).

9. Procédé selon la revendication 4, caractérisé en ce qu'on combine le signal de commande de saturation de couleur (S*) et le signal de commande de luminance (L*) par multiplication pour former un signal de commande et en ce qu'on forme le signal d'extrait (A) en mettant en œuvre et en coupant le signal de commande de teinte de couleur (T*) en fonction du signal de commande.

10. Procédé selon l'une des revendications 1 à 9, caractérisé en ce que le signal de commande de saturation de couleur (S*) est nul à partir de la valeur nulle de saturation de couleur jusqu'à une valeur limite de saturation de couleur ($x_g$) qui définit l'extension d'une zone de gris autour de l'axe de luminance (Z) de l'espace-couleur Chrominance/luminance, et ce signal de commande a une valeur constante entre la valeur de saturation de couleur limite ($x_g$) jusqu'aux valeurs de saturation de couleur, maximales.

11. Procédé selon l'une des revendication 1 à 10, caractérisé en ce que les valeurs de couleur ($R_0$, $G_0$, $B_0$) de la teinte de couleur d'extrait ($T_0$) se détermine par mesure opto-électronique d'une teinte de couleur correspondante du modèle de couleur.

12. Procédé selon l'une des revendications 1 à 11, caractérisé en ce que la déviation maximale prédéterminée de la teinte de couleur par rapport à la teinte de couleur d'extrait ($T_0$) ou encore l'angle d'ouverture de la plage de reconnaissance de teinte de couleur (21) se règle par variation d'amplitude de la valeur de chrominance (y') perpendiculairement au segment d'axe correspondant du signal de teinte de couleur (T') ou du signal de commande auxiliaire ($H_0$).

13. Procédé selon l'une des revendications 1 à 12, caractérisé en ce que la première transformation des valeurs de couleur ($R_0$, $G_0$, $B_0$) de la teinte de couleur d'extrait ($T_0$) en des valeurs de chrominance ($x'_0$, $y'_0$) se fait :

a) par une combinaison matricielle des grandeurs de mesure de couleur ($R_0$, $G_0$, $B_0$) en des grandeurs de chrominance ($x_0$, $y_0$) d'un système de coordonnées de couleur (XY) (19) dans le plan de chrominance en fonction d'une transformation de l'espace de couleur (RGB) dans l'espace de couleur chrominance/luminance suivant les équations.

$$x_0 = a_{11}R_0 + a_{12}G_0 + a_{13}B_0$$

14

$$y_0 = a_{21}R_0 + a_{22}G_0 + a_{23}B_0$$

b) et par une rotation des coordonnées des valeurs de chrominance $(x_0, y_0)$ du système de coordonnées de couleur XY (19) en fonction de la position du lieu de couleur $(F_0)$ de la teinte de couleur d'extrait $(T_0)$ à l'intérieur du plan de chrominance en des valeurs de chrominance $(x'_0, Y'_0)$ dans le système de coordonnées de couleur X'Y' (20) tourné d'un angle $(\alpha)$ par rapport au système de coordonnées de couleur XY (19) en fonction d'une rotation de l'espace-couleur chrominance/luminance autour de l'axe de luminance (Z) suivant les équations :

$$x'_0 = x_0 \cos \alpha + y_0 \sin \alpha$$
$$y'_0 = -x_0 \sin \alpha + y_0 \cos \alpha$$

l'angle $(\alpha_0)$ étant déterminé comme coefficient de transformation de façon que le lieu de couluer $(F'_0)$ transformé de la teinte d'extrait de couleur $(T_0)$ se situe sur l'un des segments d'axe du système de coordonnées de couleur X'Y' (20).

14. Procédé selon l'une des revendications 1 à 13, caractérisé en ce que la seconde transformation des grandeurs de mesure de couleur (R, G, B) des teintes de couleur des couleurs modèles détectées en des grandeurs de chrominance (x', y') des lieux de couleur transformés (F') se fait :

a) par une transformation matricielle des grandeurs de mesure de couleur (R, G, B) en des grandeurs de chrominance (x, y) du système de coordonnées de couleur XY (19) dans le plan de chrominance en fonction d'une transformation de l'espace-couleur RGB en l'espace-couleur chrominance/luminance selon les équations :

$$x = a_{11}R + a_{12}G + a_{13}B$$
$$y = a_{21}R + a_{22}G + a_{23}B$$

b) et par une rotation de coordonnées des valeurs de chrominance (x, y) dans le système de coordonnées de couleur XY (19) en des valeurs de chrominance (x', y') du système de coordonnées de couleur X'Y' (20) suivant l'angle $(\alpha_0)$ déterminé selon les équations :

$$x' = x \cos \alpha_0 + y \sin \alpha_0$$
$$y' = -x \sin \alpha_0 + y \cos \alpha_0$$

15. Procédé selon la revendication 13, caractérisé en ce que l'angle $(\alpha)$ est modifié par une opération d'équilibrage automatique jusqu'à ce que l'une des valeurs de chrominance $(x'_0$ ou $y'_0)$ du système de coordonnées de couleur X'Y' (20) soit nulle et l'angle $(\alpha_0)$ ainsi trouvé étant retenu comme coefficient de transformation.

16. Installation pour la réalisation d'extraits de couleur d'un modèle de couleur pour l'impression monochrome à l'aide :

a) d'un organe de détection opto-électronique du modèle de couleur pour obtenir des signaux de grandeurs de mesure de couleur,

b) un circuit pour former un signal d'extrait et,

c) un organe d'inscription relié au circuit générant le signal d'extrait pour inscrire point par point et ligne par ligne les extraits de couleur, caractérisée en ce que le circuit formant le signal d'extrait (A) se compose des éléments suivants :

d) un circuit de transformation (17, 18) qui est relié à l'organe de détection opto-électronique (3) et qui transforme les grandeurs de mesure de couleur $(R_0, G_0, B_0$ ou R, G, B) en des grandeurs de chrominance $(x'_0, y'_0$ ou x', y') d'un système de coordonnées de couleur X'Y' (20) dans le plan de chrominance de l'espace-couleur chrominance/luminance,

e) un circuit de sélection et de valeur (26, 28) qui est relié au circuit de transformation (17, 18) pour choisir et former les valeurs de chrominance $(+ x', |y'|)$,

f) un moyen de réglage (29) pour délimiter une zone de reconnaissance de teinte de couleur, moyen qui est relié au circuit de sélection et de valeur (26, 28),

g) un étage-diviseur (32) qui coopère avec les moyens de réglage (29) pour former un signal de teinte de couleur (T') à partir des grandeurs des valeurs de chrominance choisies,

h) un étage de différence (33) qui coopère avec l'étage de division (32) et l'organe d'inscription (7) pour former un signal de commande de teinte de couleur (T*) pour le signal d'extrait (A).

17. Installation selon la revendication 16, caractérisée en ce que le circuit pour former le signal d'extrait (A) comporte les éléments complémentaires suivants pour délimiter les couleurs d'extrait :

a) un générateur de signal de saturation de couleur (42) et un générateur de signal de luminance (36) reliés à l'organe de détection opto-électronique (3) pour donner un signal de saturation de couleur (S') et un signal de luminance (L') à partir des signaux de grandeur de mesure (R, G, B),

b) des étages de mise en forme de signaux, réglables (37, 44) qui sont montés en aval des générateurs de signaux (36, 42) pour former un signal de commande de saturation de couleur (S*) et un signal de commande de luminance (L*),

15

c) un étage de combinaison (16) qui est relié à l'étage de différence (33), aux étages de mise en forme de signaux (37, 44) et à l'organe d'inscription (7) pour combiner de manière sélective le signal de commande de teinte de couleur (T*) et le signal de commande de saturation de couleur (S*) et/ou le signal de commande de luminance (L*) pour former le signal d'extrait (A).

18. Installation selon la revendication 17, caractérisée en ce que l'étage de combinaison (16) est un multiplicateur.

$T^{*}=f_{1}(T')$

$L^{*}=f_{2}(L')$

$S^{*}=f_{3}(S')$

$\frac{|y'|}{x'}$

$|y'|$

Fig.1

*Fig.2*

*Fig.3*

*Fig.4*

Fig.5

Fig.6

Fig.7

Fig.9

Fig.8

4